# EUROPEAN PATENT APPLICATION

(11) **EP 4 358 284 A1**
(43) Date of publication of application: **24.04.2024**
(21) Application number: 22922689.9
(22) Date of filing: 26.01.2022
(51) Int. Cl.: H01M 50/593, H01M 50/186

(54) **END COVER ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN)
(74) Representative: Rowlands, Stuart Michael
(86) International application number: PCT/CN2022/074118
(87) International publication number: WO 2023/141839

(57) **Abstract**

The embodiments of the present application belong to the technical field of batteries. Provided are an end cover assembly, a battery cell, a battery and an electric device. The end cover assembly comprises an end cover, an electrode terminal, a sealing member, a connector, a first insulation member and a first current guide channel, wherein the end cover is provided with a first mounting hole and is configured to seal a casing of the battery cell; the electrode terminal is partially arranged in the first mounting hole in a passing manner; the sealing member is at least partially located in the first mounting hole; the connector is connected to the electrode terminal; the first insulation member comprises a body portion and an extension portion; the body portion is located between the connector and the end cover and is provided with a second mounting hole through which the electrode terminal passes; the extension portion is located on the periphery of the connector and surrounds an edge of the body portion; and the first current guide channel is formed between the extension portion and the connector and communicates with the second mounting hole. When the sealing member fails, the interior of the casing communicates with the exterior of the casing, such that the phenomenon of false sealing of the battery cell is eliminated, thereby improving the safety of the battery cell.

## Description

### Technical Field

The present application relates to the technical field of batteries, and specifically to an end cover assembly, a battery cell, a battery, and an electrical device.

### Background

With the development of the new energy technology, the applications of batteries are becoming increasingly widespread. For example, batteries are applied to mobile phones, laptops, battery vehicles, electric vehicles, electric airplanes, electric ships, electric toy cars, electric toy ships, electric toy airplanes, electric tools, and the like.

Due to the presence of an electrolyte solution inside a battery cell, the battery cell needs to meet a sealing requirement to prevent the leakage of the electrolyte from the inside of the battery cell to the outside of the battery cell, which causes safety accidents. In order to ensure that the sealing performance of the battery cell meets the use requirement, after the assembly of the battery cell is completed, the sealing performance of the battery cell generally needs to be detected. For a general battery cell, even in a case that the sealing performance of the battery cell is detected as meeting the use requirement, the battery cell may still have the situation of liquid leakage after being used for a period of time, which affects the safety of the battery cell.

### Summary of the Invention

Embodiments of the present application provide an end cover assembly, a battery cell, a battery, and an electrical device, which can effectively improve the safety of the battery cell.

In a first aspect, embodiments of the present application provide an end cover assembly, including: an end cover, provided with a first mounting hole penetrating through the end cover along a thickness direction of the end cover, the end cover being configured to seal a case of a battery cell; an electrode terminal, partially penetrating into the first mounting hole; a sealing member, at least partially located in the first mounting hole to seal the electrode terminal and the end cover; a connecting element, connected to the electrode terminal; a first insulating member, including a body portion and an extension portion, the body portion being located between the connecting element and the end cover along the thickness direction, the body portion being provided with a second mounting hole for the electrode terminal to pass through, and the extension portion being located on the outer periphery of the connecting element and enclosing the edge of the body portion; and a first guide channel, formed between the extension portion and the connecting element, the first guide channel being in communication with the second mounting hole so that the inside of the case is in communication with the outside of the case when the sealing member fails.

In the above technical solution, the body portion of the first insulating member is located between the connecting element and the end cover, and the extension portion of the first insulating member is located on the outer periphery of the connecting element. Both the body portion and the extension portion can play a role in separating the connecting element from the end cover to increase the creepage height, so that the first insulating member has a good insulating effect on the connecting element and the end cover. The first guide channel is formed between the extension portion and the connecting element, and the first guide channel is in communication with the second mounting hole. When the sealing member fails, the inside of the case is in communication with the outside of the case so as to eliminate the phenomenon of false sealing of the battery cell and improve the safety of the battery cell.

In some embodiments, the first guide channel is a first guide groove arranged on the inner side surface of the extension portion. The first guide channel having this structure is simple in structure and easy to mold, and does not affect the insulating performance of the extension portion.

In some embodiments, along the thickness direction, one end of the first guide groove extends to the end of the extension portion away from the body portion. During molding, the first guide groove may be molded from the end of the extension portion away from the body portion to a direction close to the body portion, so that the molding difficulty of the first guide groove is reduced. In addition, the length of the first guide groove is increased, and the first guide groove forms an outlet at the end of the extension portion away from the body portion, so that even if the connecting element partially exceeds the end of the extension portion away from the body portion, the smoothness of the first guide groove can be ensured.

In some embodiments, the first guide channel is a first guide groove arranged on the outer side surface of the connecting element. The first guide channel having this structure is simple in structure and easy to mold. Since the first guide channel is arranged on the outer side surface of the connecting element, the strength of the extension portion cannot be reduced due to the arrangement of the first guide channel, and the service life of the first insulating member is prolonged.

In some embodiments, along the thickness direction, one end of the first guide groove extends to the end of the connecting element away from the body portion. The molding difficulty of the first guide groove is reduced, the length of the first guide groove is increased, and the smoothness of the first guide groove is ensured.

In some embodiments, the end cover assembly further includes: a second guide channel, formed between the body portion and the connecting element, the second guide channel being configured to communicate the first guide channel with the second mounting hole. The second guide channel plays a role in communicating the first guide channel with the second mounting hole, the second guide channel is formed between the body portion and the connecting element, and thus, a communication path communicating the first guide channel with the second mounting hole can be effectively shortened.

In some embodiments, along the thickness direction, the connecting element has a first surface facing the body portion; and the second guide channel is a second guide groove arranged on the first surface. The second guide groove is arranged on the first surface of the connecting element facing the body portion, so that the molding difficulty of the second guide groove can be effectively reduced. In addition, since the second guide groove is arranged on the connecting element, the insulating performance of the body portion of the first insulating member cannot be affected.

In some embodiments, the connecting element is provided with a third mounting hole for the electrode terminal to pass through; and the second guide groove extends to the hole wall of the third mounting hole. The second guide groove is in communication with the third mounting hole due to this structure. Since the electrode terminal passes through the second mounting hole and the third mounting hole, the second guide groove is in communication with the second mounting hole, and thus, the communication effect between the second guide groove and the second mounting hole can be improved.

In some embodiments, along the thickness direction, the body portion has a second surface facing the connecting element; and the second guide channel is a second guide groove arranged on the second surface. Since the second mounting hole is arranged on the body portion and the second guide groove is arranged on the second surface of the body portion facing the connecting element, it is easier to achieve the communication between the second guide groove and the second mounting hole, and the communication effect between the second guide groove and the second mounting hole is improved.

In some embodiments, the hole wall of the second mounting hole is provided with a third guide groove, along the thickness direction, the third guide groove penetrates through the body portion, and the third guide groove is in communication with the second guide groove. The third guide groove plays a role in communicating the second guide groove with the second mounting hole, and the third guide groove can increase a gap between the body portion and the electrode terminal, thereby ensuring good communication between the inside of the case and the outside of the case when the sealing member fails.

In some embodiments, the second guide groove extends to the first guide groove to achieve communication between the second guide groove and the first guide groove. This structure achieves direct communication between the second guide groove and the first guide groove, thereby shortening the communication path communicating the inside of the case with the outside of the case.

In some embodiments, the width of the first guide groove is greater than the width of the second guide groove. This structure can ensure that the first guide groove and the second guide groove have a sufficiently large overlapping region, ensure the width of a communication position between the first guide groove and the second guide groove, and reduce the risk of a narrower communication position between the first guide groove and the second guide groove caused by significant misalignment between the first guide groove and the second guide groove due to manufacturing errors.

In a second aspect, embodiments of the present application provide a battery cell, including: a case having an opening; and the end cover assembly provided in any one of the embodiments in the first aspect, the end cover being configured to cover the opening to seal the case.

In a third aspect, embodiments of the present application provide a battery, including: the battery cell provided in any one of the embodiments in the second aspect; and a box body for accommodating the battery cell.

In a fourth aspect, embodiments of the present application provide an electrical device, including the battery provided in any one of the embodiments in the third aspect.

In a fifth aspect, embodiments of the present application provide a manufacturing method for a battery cell. The manufacturing method includes: providing a case having an opening; providing an end cover assembly including: an end cover, provided with a first mounting hole penetrating through the end cover along a thickness direction of the end cover, the end cover being configured to seal a case of a battery cell; an electrode terminal, partially penetrating into the first mounting hole; a sealing member, at least partially located in the first mounting hole to seal the electrode terminal and the end cover; a connecting element, connected to the electrode terminal; a first insulating member, including a body portion and an extension portion, the body portion being located between the connecting element and the end cover along the thickness direction, the body portion being provided with a second mounting hole for the electrode terminal to pass through, and the extension portion being located on the outer periphery of the connecting element and enclosing the edge of the body portion; and a first guide channel, formed between the extension portion and the connecting element, the first guide channel being in communication with the second mounting hole so that the outside of the case is in communication with the inside of the case when the sealing member fails; and covering the opening with the end cover.

In a sixth aspect, embodiments of the present application provide a manufacturing device for a battery cell. The manufacturing device includes: a first providing apparatus, configured to provide a case having an opening; a second providing apparatus, configured to provide an end cover assembly including: an end cover, provided with a first mounting hole penetrating through the end cover along a thickness direction of the end cover, the end cover being configured to seal a case of a battery cell; an electrode terminal, partially penetrating into the first mounting hole; a sealing member, at least partially located in the first mounting hole to seal the electrode terminal and the end cover; a connecting element, connected to the electrode terminal; a first insulating member, including a body portion and an extension portion, the body portion being located between the connecting element and the end cover along the thickness direction, the body portion being provided with a second mounting hole for the electrode terminal to pass through, and the extension portion being located on the outer periphery of the connecting element and enclosing the edge of the body portion; and a first guide channel, formed between the extension portion and the connecting element, the first guide channel being in communication with the second mounting hole so that the outside of the case is in communication with the inside of the case when the sealing member fails; and an assembling apparatus, configured to cover the opening with the end cover.

### Description of Drawings

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural view of a vehicle provided in some embodiments of the present application.
Fig. 2 is an exploded view of a battery provided in some embodiments of the present application.
Fig. 3 is an exploded view of a battery cell provided in some embodiments of the present application.
Fig. 4 is an exploded view of an end cover assembly shown in Fig. 3.
Fig. 5 is a cross-sectional view of the end cover assembly shown in Fig. 4.
Fig. 6 is a schematic view of connection between a connecting element and a first insulating member provided in some embodiments of the present application.
Fig. 7 is a schematic view of connection between a connecting element and a first insulating member provided in some other embodiments of the present application.
Fig. 8 is a schematic structural view of the connecting element shown in Fig. 6.
Fig. 9 is a schematic structural view of the first insulating member shown in Fig. 6.
Fig. 10 is a flowchart of a manufacturing method for a battery cell provided in some embodiments of the present application.
Fig. 11 is a schematic block diagram of a manufacturing device for a battery cell provided in some embodiments of the present application.

Reference numerals: 10-box body; 11-first portion; 12-second portion; 20-battery cell; 21-case; 22-electrode assembly; 23-end cover assembly; 230-end cover; 2301-first mounting hole; 231-electrode terminal; 232-sealing member; 233-connecting element; 2331-outer side surface; 2332-third mounting hole; 2333-first surface; 234-first insulating member; 2341-body portion; 2341a-second mounting hole; 2341b-second surface; 2341c-third guide groove; 2342-extension portion; 2342a-inner side surface; 235-second insulating member; 236-current collecting member; 237-pressure relief mechanism; 238-first guide channel; 239-second guide channel; 100-battery; 200-controller; 300-motor; 1000-vehicle; 2000-manufacturing device; 2100-first providing apparatus; 2200-second providing apparatus; 2300-assembling apparatus; Z-thickness direction.

### Detailed Description

In order to make the objectives, technical solutions and advantages of the embodiments of the present application clearer, the technical solutions in the embodiments of the present application will be clearly described below in conjunction with the drawings in the embodiments of the present application. It is apparent that the described embodiments are a part of the embodiments of the present application rather than all the embodiments. Based on the embodiments in the present application, all other embodiments obtained by those of ordinary skill in the art without creative effort fall within the protection scope of the present application.

Unless otherwise defined, all technical and scientific terms used in the present application have the same meaning as commonly understood by those skilled in the art belonging to the technical field of the present application. The terms used in the specification of the present application are intended only for the purpose of describing specific embodiments and are not intended to limit the present application. The terms "including" and "having" and any variations thereof in the specification and claims of the present application and in the description of drawings above are intended to cover non-exclusive inclusion. The terms "first", "second", and the like in the specification and claims of the present application or the above drawings are used for distinguishing different objects, rather than used for describing a specific order or primary and secondary relationship.

The reference to "embodiments" in the present application means that specific features, structures, or characteristics described in conjunction with embodiments may be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that unless otherwise clearly specified and defined, the terms "mounting", "connecting", "connection" and "attachment" should be understood in a broad sense. For example, the connection may be fixed connection, detachable connection, or integrated connection, or may be direct connection, indirect connection through an intermediate, or internal communication of two components. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals represent the same components. Moreover, for simplicity, in different embodiments, detailed descriptions of the same components are omitted. It should be understood that the thicknesses, lengths, widths, and other sizes of various components in the embodiments of the present application shown in the drawings, as well as the overall thickness, length, width and other sizes of an integrated apparatus are only illustrative and should not constitute any restrictions on the present application.

The term "a plurality of' in the present application refers to two or more (including two).

In the present application, the battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, rectangular, or in other shapes, which is not limited in the embodiments of the present application. Battery cells are generally divided into three types according to encapsulating manners: cylindrical battery cells, square battery cells and pouch cells, which are not limited in the embodiments of the present application.

The battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box body for encapsulating one or a plurality of battery cells. The box body can prevent liquids or other foreign matters from affecting the charging or discharging of the battery cell.

The battery cell includes an electrode assembly and an electrolyte solution, and the electrode assembly includes a positive electrode plate, a negative electrode plate and a separator. The battery cell operates mainly relying on movement of metal ions between the positive electrode plate and the negative electrode plate. The positive electrode plate includes a positive electrode current collector and a positive electrode active material layer, the positive electrode active material layer is coated on a surface of the positive electrode current collector, the positive electrode current collector which is not coated with the positive electrode active material layer protrudes from the positive electrode current collector coated with the positive electrode active material layer, and the positive electrode current collector which is not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, the negative electrode active material layer is coated on a surface of the negative electrode current collector, the negative electrode current collector which is not coated with the negative electrode active material layer protrudes from the negative electrode current collector which is coated with the negative electrode active material layer, and the negative electrode current collector which is not coated with the negative electrode active material layer is used as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The separator may be made of polypropylene (PP), polyethylene (PE), or the like. In addition, the electrode assembly may be of a wound structure or a stacked structure, which is not limited in the embodiments of the present application.

The inventor noticed that for a general battery cell, the battery cell includes a case, an electrode assembly and an end cover assembly, the electrode assembly is accommodated in the case, and the end cover assembly covers one end of the case. In order to facilitate the extraction of the electric energy from the inside of the battery cell, an end cover of the end cover assembly is provided with a mounting hole, and an electrode terminal electrically connected to the electrode assembly passes through the mounting hole and extends to the outer side of the end cover (the side of the end cover away from the electrode assembly). In order to prevent an electrolyte solution from leaking to the outside of the battery cell through the mounting hole and causing mounting accidents, a sealing member is generally arranged in the mounting hole, and the electrode terminal and the end cover are sealed by the sealing member.

After the assembly of the battery cell is completed, the sealing performance of the battery cell generally needs to be detected to ensure that the sealing performance of the battery cell meets the use requirement. However, the inventor found that in a case that the sealing performance of the battery cell is detected to meet the use requirement, the battery cell may still have the situation of liquid leakage after being used for a period of time, which affects the safety of the battery cell.

Through further research, the inventor found that when the sealing member fails, an insulating member playing an insulating role in the end cover assembly plays a certain sealing role to the end cover and the electrode terminal, which causes the phenomenon of false sealing of the battery cell. During detection of the sealing performance, since the battery cell is not in an actual operating condition, the phenomenon of false sealing of the battery cell enables the battery cell to meet sealing performance detection requirements, but actual operating condition requirements cannot be met.

In view of this, embodiments of the present application provide an end cover assembly, including an end cover, an electrode terminal, a sealing member, a connecting element, a first insulating member and a first conducting channel. The end cover is provided with a first mounting hole penetrating through the end cover along a thickness direction of the end cover, and the end cover is configured to seal a case of a battery cell. The electrode terminal partially penetrates into the first mounting hole. The sealing member is at least partially located in the first mounting hole to seal the electrode terminal and the end cover. The connecting element is connected to the electrode terminal. The first insulating member includes a body portion and an extension portion, the body portion is located between the connecting element and the end cover along the thickness direction, the body portion is provided with a second mounting hole for the electrode terminal to pass through, and the extension portion is located on the outer periphery of the connecting element and encloses the edge of the body portion. The first guide channel is formed between the extension portion and the connecting element, and the first guide channel is in communication with the second mounting hole so that the inside of the case is in communication with the outside of the case when the sealing member fails.

In this end cover assembly, the first guide channel is formed between the extension portion and the connecting element, and the first guide channel is in communication with the second mounting hole. When the sealing member fails, the inside of the case is in communication with the outside of the case so as to eliminate the phenomenon of false sealing of the battery cell and improve the safety of the battery cell.

In addition, since the first guide channel is formed between the extension portion and the connecting element, the arrangement of the first guide channel cannot affect the sealing performance between the body portion and the end cover. In a process of injecting an electrolyte solution into the battery cell, even if there is residual electrolyte solution on the end cover, the electrolyte solution is also difficult to enter the first mounting hole through a gap between the body portion and the end cover, thereby reducing the risk of the electrode terminal being electrically connected to the end cover due to the electrolyte solution entering the first mounting hole, resulting in the end cover being electrified, and improving the safety of the battery cell.

The end cover assembly described in the embodiments of the present application is suitable for battery cells, batteries, and electrical devices using batteries.

The electrical devices may be vehicles, mobile phones, portable devices, laptops, ships, spacecrafts, electric toys, electric tools, and the like. The vehicles may be fuel vehicles, gas vehicles or new energy vehicles, and the new energy vehicles may be all-electric vehicles, hybrid electric vehicles, extended-range electric vehicles, and the like. The spacecrafts include airplanes, rockets, space shuttles, spaceships, and the like. The electric toys include fixed or mobile electric toys, such as game consoles, electric car toys, electric ship toys and electric airplane toys. The electric tools include metal cutting electric tools, grinding electric tools, assembly electric tools and railway electric tools, such as electric drills, electric grinders, electric wrenches, electric screwdrivers, electric hammers, electric impact drills, concrete vibrators, and electric planers. The above electrical devices are not specially limited in the embodiments of the present application.

For convenience of description in the following embodiments, the electrical device being a vehicle is taken as an example for description.

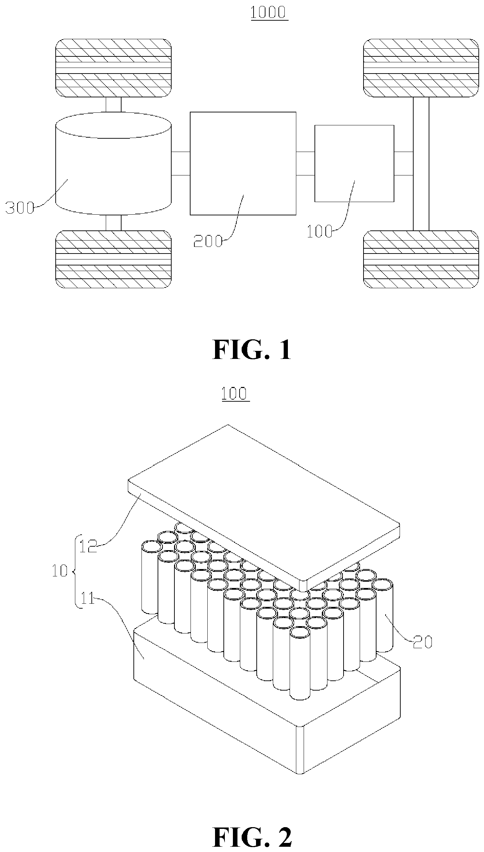

Referring to Fig. 1, Fig. 1 is a schematic structural view of a vehicle 1000 provided in some embodiments of the present application. A battery 100 is arranged inside the vehicle 1000, and the battery 100 may be arranged at the bottom, head, or tail of the vehicle 1000. The battery 100 may be configured to supply power to the vehicle 1000. For example, the battery 100 may be used as an operational power supply of the vehicle 1000.

The vehicle 1000 may further include a controller 200 and a motor 300. The controller 200 is configured to control the battery 100 to supply power to the motor 300, so as to meet the working power demand for starting, navigation and driving of the vehicle 1000.

In some embodiments of the present application, the battery 100 not only may serve as an operational power supply of the vehicle 1000, but also may serve as a driving power supply of the vehicle 1000, thus replacing or partially replacing fuel or natural gas to provide driving power for the vehicle 1000.

Referring to Fig. 2, Fig. 2 is an exploded view of a battery 100 provided in some embodiments of the present application. The battery 100 includes a box body 10 and a battery cell 20, and the box body 10 is configured to accommodate the battery cell 20.

The box body 10 is a component for accommodating the battery cell 20, the box body 10 provides an accommodating space for the battery cell 20, and the box body 10 may be of various structures. In some embodiments, the box body 10 may include a first portion 11 and a second portion 12, the first portion 11 and the second portion 12 being covered to each other to define an accommodating space for accommodating the battery cell 20. The first portion 11 and the second portion 12 may be of a variety of shapes, such as a rectangular parallelepiped, a cylinder, or the like. The first portion 11 may be a hollow structure with one side open, the second portion 12 may also be a hollow structure with one side open, and the opening side of the second portion 12 covers the opening side of the first portion 11, so as to form a box body 10 with an accommodating space. Alternatively, the first portion 11 may be a hollow structure with one side open, the second portion 12 may be a plate-like structure, and the second portion 12 covers the opening side of the first portion 11 to form a box body 10 with an accommodating space. The first portion 11 and the second portion 12 may be sealed by a sealing member, which may be a sealing ring, a sealant, or the like.

There may be one or more battery cell 20 in a battery 100. If there are a plurality of battery cells 20, the plurality of battery cells 20 may be connected in series or parallel or series-parallel connection, where the series-parallel connection means that the plurality of battery cells 20 are connected in both series and parallel. The plurality of battery cells 20 may be connected in series or parallel or series-parallel connection to form battery modules first, and then, the plurality of battery modules are connected in series or parallel or series-parallel connection to form a whole which is accommodated in the box body 10. All battery cells 20 may be directly connected in series or parallel or series-parallel connection, and then, a whole composed of all battery cells 20 is accommodated in the box body 10.

In some embodiments, the battery 100 may further include a convergence component, and the plurality of battery cells 20 may be electrically connected through the convergence component, so as to realize series connection, parallel connection or series-parallel connection of the plurality of battery cells 20. The confluence component may be a metal conductor, such as copper, iron, aluminum, stainless steel, aluminum alloy, or the like.

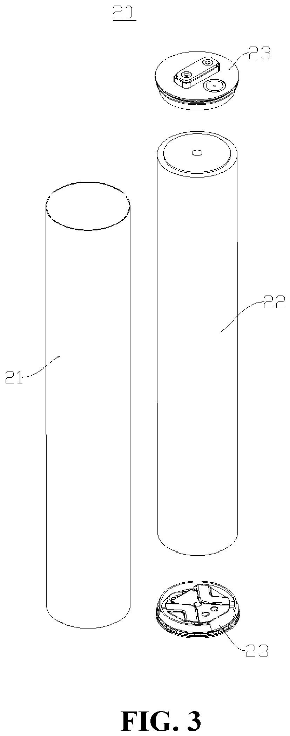

Referring to Fig. 3, Fig. 3 is an exploded view of a battery cell 20 provided in some embodiments of the present application. The battery cell 20 includes a case 21, an electrode assembly 22 and an end cover assembly 23.

The case 21 is a component for accommodating the electrode assembly 22, the case 21 may be a hollow structure with an opening formed at one end, and the case 21 may also be a hollow structure with openings formed at two opposite ends. The case 21 may be of a variety of shapes, such as a cylinder, a rectangular parallelepiped, or the like. The case 21 may be made of various materials, such as copper, iron, aluminum, steel, aluminum alloy, or the like.

The electrode assembly 22 is a component in which an electrochemical reaction occurs in the battery cell 20. The electrode assembly 22 may include a positive electrode plate, a negative electrode plate and a separator. The electrode assembly 22 may be a wound structure formed by winding the positive electrode plate, the separator, and the negative electrode plate, or may be a stacked structure formed by stacking the positive electrode plate, the separator and the negative electrode plate. The electrode assembly 22 has a positive tab and a negative tab, the positive tab may be a portion of the positive electrode plate on which the positive electrode active material layer is not coated, and the negative tab may be a portion of the negative electrode plate on which the negative electrode active material layer is not coated.

The end cover assembly 23 is a component that covers the opening of the case 21 to isolate the internal environment of the battery cell 20 from the external environment. There may be one or two end cover assemblies 23 in the battery cell 20. If the case 21 is a hollow structure with an opening formed at one end, one end cover assembly 23 is arranged correspondingly, and both the positive tab and the negative tab in the electrode assembly 22 can be electrically connected to the same end cover assembly 23. If the case 21 is a hollow structure with openings formed at two opposite ends, two end cover assemblies 23 are arranged correspondingly, the two end cover assemblies 23 cover the two openings of the case 21 respectively, and the positive tab and the negative tab in the electrode assembly 22 can be electrically connected to the two end cover assemblies 23 respectively.

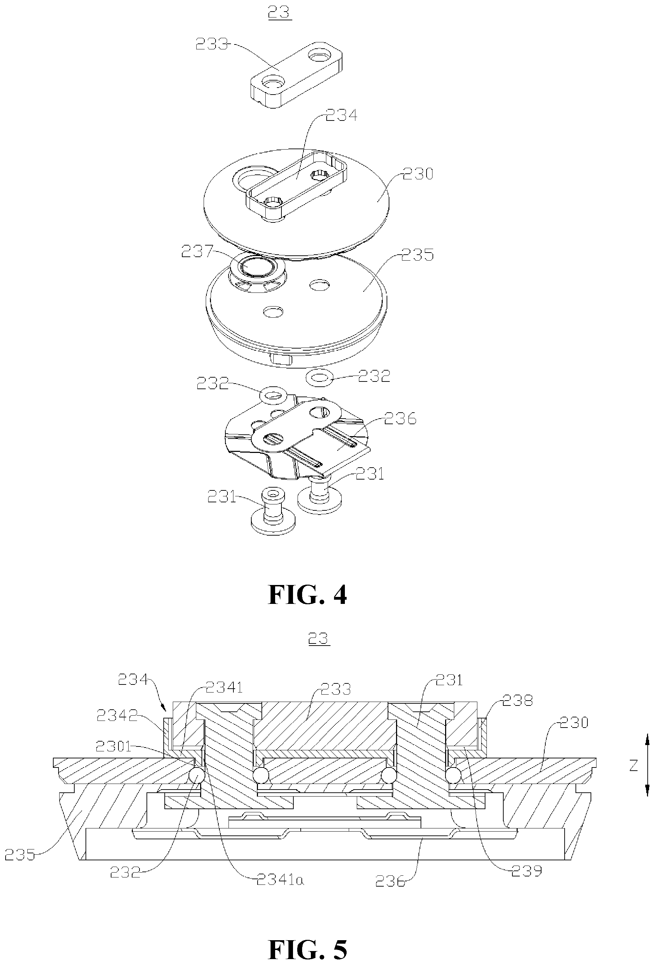

Referring to Fig. 4, Fig. 4 is an exploded view of an end cover assembly 23 shown in Fig. 3. The end cover assembly 23 may include an end cover 230, an electrode terminal 231, a sealing member 232, a connecting element 233, a first insulating member 234, a second insulating member 235, and other components.

The end cover 230 is a component that covers the opening of the case 21 to seal the case 21, and the end cover 230 and the case 21 together define an accommodating space for accommodating the electrode assembly 22 and the electrolyte solution. The shape of the end cover 230 may be adapted to the shape of the case 21. For example, the case 21 is a rectangular parallelepiped structure, and the end cover 230 is a rectangular plate-like structure adapted to the case 21. For another example, the case 21 is a cylinder structure, and the end cover 230 is a circular plate-like structure adapted to the case 21. The end cover 230 may also be made of various materials, such as copper, iron, aluminum, steel, aluminum alloy, or the like.

The electrode terminal 231 is mounted on the end cover 230 to output the electric energy of the electrode terminal 231. The electrode terminal 231 is configured to be electrically connected to the tab of the electrode assembly 22. The electrode terminal 231 may be directly connected or indirectly connected to the tab of the electrode assembly 22. Exemplarily, the electrode terminal 231 is electrically connected to the tab through a current collecting member 236.

There may be one or a plurality of electrode terminals 231 in the end cover assembly 23. Taking two electrode terminals 231 in the end cover assembly 23 as an example, the polarities of the two electrode terminals 231 may be the same or opposite. If the polarities of the two electrode terminals 231 are the same, the two electrode terminals 231 can be connected to the positive tab or the negative tab through one current collecting member 236. If the polarities of the two electrode terminals 231 are opposite, one electrode terminal 231 can be connected to the positive tab through one current collecting member 236, and the other electrode terminal 231 can be connected to the negative tab through another current collecting member 236.

The sealing member 232 is a part configured to seal the electrode terminal 231 and the end cover 230, so as to reduce the risk of leakage of the electrolyte solution inside the battery cell 20 through a gap between the end cover 230 and the electrode terminal 231. The sealing member 232 may be a sealing ring sleeving an outer side of the electrode terminal 231, and the sealing member 232 may be made of a rubber material.

The connecting element 233 is a component connected to the electrode terminal 231 to facilitate the connection between the battery cell 20 and an external component. The connecting element 233 may be a riveting block for riveting the electrode terminal 231 to the end cover 230. The connecting element 233 may be made of a metal material, such as copper, iron, aluminum, steel, aluminum alloy, or the like. In embodiments where a plurality of battery cells 20 are connected in series, parallel or series-parallel connection through a convergence component, the convergence component may be connected to the connecting element 233 by welding or the like.

In the embodiment where there are two electrode terminals 231 in the end cover assembly 23, there may be one or two connecting elements 233 in the end cover assembly 23. If there are two connecting elements 233 in the end cover assembly 23, one electrode terminal 231 is connected to one connecting element 233 correspondingly. As shown in FIG. 4, if there is one connecting element 233 in the end cover assembly 23, two electrode terminals 231 are connected to the same connecting element 233, that is, two electrode terminals 231 share one connecting element 233. In a case that the polarities of two electrode terminals 231 in the end cover assembly 23 are the same, two electrode terminals 231 may share one connecting element 233. In a case that the polarities of two electrode terminals 231 in the end cover 230 are opposite, two electrode terminals 231 may be respectively connected to two connecting elements 233, and an insulating component may be arranged between two connecting elements 233 for insulation.

The first insulating member 234 is a component arranged on an outer side of the end cover 230 to insulate and isolate the connecting element 233 from the end cover 230, and the outer side of the end cover 230 is the side of the end cover 230 away from the electrode assembly 22. The first insulating member 234 is made of insulating materials, such as rubber and plastic.

The second insulating member 235 is a component arranged on an inner side of the end cover 230 to insulate and isolate the electrode assembly 22 from the end cover 230, and the outer side of the end cover 230 is the side of the end cover 230 facing the electrode assembly 22. The second insulating member 235 is made of insulating materials, such as rubber and plastic.

Exemplarily, as shown in FIG. 4, in a case that the electrode terminal 231 is riveted to the end cover 230, the connecting element 233, the first insulating member 234, the end cover 230, the second insulating member 235 and the current collecting member 236 are connected together through the electrode terminal 231.

In some embodiments, the end cover assembly 23 may further include a pressure relief mechanism 237, and the pressure relief mechanism 237 is arranged on the end cover 230. When the internal pressure or temperature of the battery cell 20 reaches a threshold, the internal pressure of the battery cell 20 is relieved through the pressure relief mechanism 237. The pressure relief mechanism 237 may be an explosion-proof valve, a rupture disk, a pressure relief valve, or the like.

In some embodiments, the end cover 230 may further be provided with a liquid injection hole, so that an electrolyte solution may be injected into the battery 100 through the liquid injection hole. In the embodiment where there is one end cover assembly 23 in the battery cell 20, the liquid injection hole and the pressure relief mechanism 237 may be arranged on the same end cover 230. In the embodiment where there are two end cover assemblies 23 in the battery cell 20, the liquid injection hole and the pressure relief mechanism 237 may be respectively arranged on two end covers 230.

Referring to Fig. 5, Fig. 5 is a cross-sectional view of the end cover assembly 23 shown in Fig. 4. An embodiment of the present application provides an end cover assembly 23. The end cover assembly 23 includes an end cover 230, an electrode terminal 231, a sealing member 232, a connecting element 233, a first insulating member 234 and a first guide channel 238. The end cover 230 is provided with a first mounting hole 2301 penetrating through the end cover 230 along a thickness direction Z of the end cover 230, and the end cover 230 is configured to seal a case 21 of a battery cell 20. The electrode terminal 231 partially penetrates into the first mounting hole 2301. The sealing member 232 is at least partially located in the first mounting hole 2301 to seal the electrode terminal 231 and the end cover 230. The connecting element 233 is connected to the electrode terminal 231. The first insulating member 234 includes a body portion 2341 and an extension portion 2342, the body portion 2341 is located between the connecting element 233 and the end cover 230 along the thickness direction Z of the end cover 230, the body portion 2341 is provided with a second mounting hole 2341a for the electrode terminal 231 to pass through, and the extension portion 2342 is located on the outer periphery of the connecting element 233 and encloses the edge of the body portion 2341. The first guide channel 238 is formed between the extension portion 2342 and the connecting element 233, and the first guide channel 238 is in communication with the second mounting hole 2341a so that the inside of the case 21 is in communication with the outside of the case 21 when the sealing member 232 fails.

The first mounting hole 2301 on the end cover 230 corresponds to the electrode terminal 231 one by one, and the second mounting hole 2341a on the body portion 2341 also corresponds to the electrode terminal 231 one by one. As shown in FIG. 5, in the embodiment where there are two electrode terminals 231 in the end cover assembly 23, the polarities of the two electrode terminals 231 are the same and the two electrode terminals 231 share one connecting element 233, the end cover 230 is provided with two first mounting holes 2301 correspondingly, and the body portion 2341 is also provided with two second mounting holes 2341a correspondingly. A sealing member 232 is mounted in each of the two first mounting holes 2301.

The extension portion 2342 encloses the edge of the body portion 2341, the extension portion 2342 and the body portion 2341 together define an accommodating cavity, and along the thickness direction Z of the end cover 230, the accommodating cavity forms an opening portion at the end of the extension portion 2342 away from the body portion 2341. The connecting element 233 may enter the accommodating cavity from the opening portion, so that the extension portion 2342 is located on the outer periphery of the connecting element 233. The connecting element 233 may be completely accommodated in the accommodating cavity or partially accommodated in the accommodating cavity. In Fig. 5, in order to facilitate the connection between the connecting element 233 and other components (such as a convergence component), the connecting element 233 is partially accommodated in the accommodating cavity, and the connecting element 233 partially exceeds the end of the extension portion 2342 away from the body portion 2341. The shape of the accommodating cavity may be adapted to the shape of the connecting element 233. Exemplarily, the connecting element 233 is a rectangular block, and the accommodating cavity is a rectangular cavity.

The first guide channel 238 is formed between the extension portion 2342 and the connecting element 233. The first guide channel 238 may be a guide groove arranged on the inner side surface 2342a of the extension portion 2342, a guide groove arranged on the outer side surface 2331 of the connecting element 233, a channel formed by the guide groove on the inner side surface 2342a of the extension portion 2342 and the guide groove on the outer side surface 2331 of the connecting element 233, a channel formed by a gap between the inner side surface 2342a of the extension portion 2342 and the outer side surface 2331 of the connecting element 233, or an irregular channel formed by the inner side surface 2342a of the extension portion 2342 being a rough surface and/or the outer side surface 2331 of the connecting element 233 being a rough surface.

The first guide channel 238 and the second mounting hole 2341a may be in direct or indirect communication. In the embodiment where there are two electrode terminals 231 in the end cover assembly 23 and the body portion 2341 is provided with two second mounting holes 2341a correspondingly, it may be that only one second mounting hole 2341a is provided with a first guide channel 238 correspondingly, or both second mounting holes 2341a are provided with first guide channels 238 correspondingly.

It should be noted that in the embodiments of the present application, the conditions that the sealing member 232 is not mounted in place, the sealing member 232 is not mounted in the mounting hole, the sealing member 232 has defects, and the like belong to the failure of the sealing member 232.

In the embodiments of the present application, the body portion 2341 of the first insulating member 234 is located between the connecting element 233 and the end cover 230, and the extension portion 2342 of the first insulating member 234 is located on the outer periphery of the connecting element 233. Both the body portion 2341 and the extension portion 2342 can play a role in separating the connecting element 233 from the end cover 230 to increase the creepage height, so that the first insulating member 234 has a good insulating effect on the connecting element 233 and the end cover 230.

The first guide channel 238 is formed between the extension portion 2342 and the connecting element 233, and the first guide channel 238 is in communication with the second mounting hole 2341a. When the sealing member 232 fails, the inside of the case 21 is in communication with the outside of the case 21 so as to eliminate the phenomenon of false sealing of the battery cell 20 and improve the safety of the battery cell 20.

When the sealing performance of the battery cell 20 is detected, a detection medium may be injected into the battery cell 20. If the sealing member 232 fails, taking neglected loading of the sealing member 232 as an example, the detection medium will finally flow out through the first guide channel 238, so as to accurately judge the failure of the sealing member 232.

In addition, since the first guide channel 238 is formed between the extension portion 2342 and the connecting element 233, the arrangement of the first guide channel 238 cannot affect the sealing performance between the body portion 2341 and the end cover 230. In a process of injecting an electrolyte solution into the battery cell 20, even if there is residual electrolyte solution on the end cover 230, the electrolyte solution is also difficult to enter the first mounting hole 2301 through a gap between the body portion 2341 and the end cover 230, thereby reducing the risk of the electrode terminal 231 being electrically connected to the end cover 230 due to the electrolyte solution entering the first mounting hole 2301, resulting in the end cover 230 being electrified, and improving the safety of the battery cell 20.

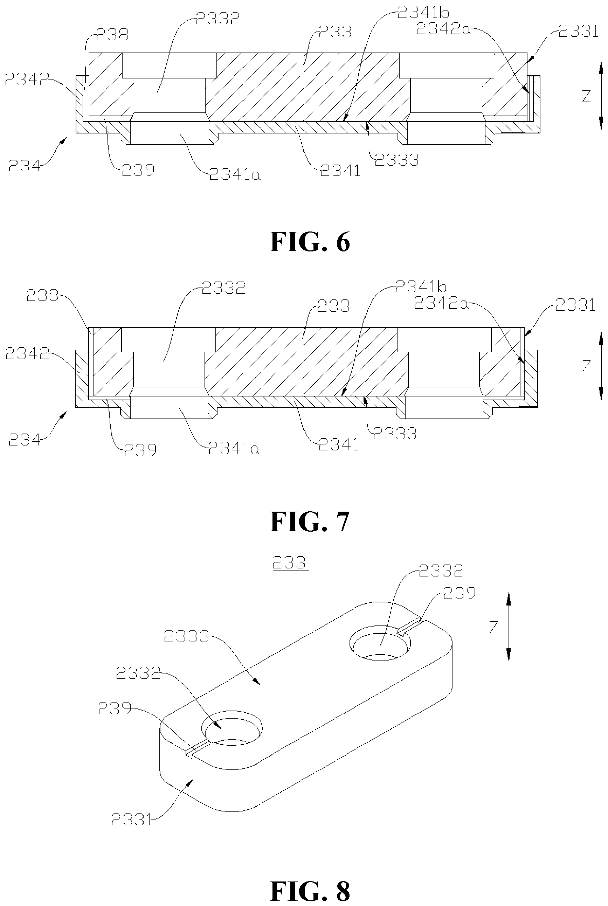

In some embodiments, referring to Fig. 6, Fig. 6 is a schematic view of connection between a connecting element 233 and a first insulating member 234 provided in some embodiments of the present application. The first guide channel 238 is a first guide groove arranged on the inner side surface 2342a of the extension portion 2342.

The inner side surface 2342a is a surface of the extension portion 2342 opposite to the connecting element 233 and distributed along a circumferential direction of the connecting element 233, and the inner side surface 2342a forms a cavity side wall of the accommodating cavity. In this embodiment, the first guide groove may be a straight groove or a bent groove. If the first guide groove is a linear groove, the first guide groove may extend along the thickness direction Z of the end cover 230, or may be arranged at a non-zero angle with the thickness direction Z of the end cover 230. The cross section of the first guide groove may be rectangular, arc-shaped, V-shaped, or the like.

In a case that there are two electrode terminals 231 in the end cover assembly 23 and the body portion 2341 is provided with two second mounting holes 2341a correspondingly, the two second mounting holes 2341a may be provided with two first guide grooves correspondingly, and in the arrangement direction of the two second mounting holes 2341a, the two first guide grooves are located on both sides of the extension portion 2342.

In this embodiment, the first guide channel 238 is a first guide groove arranged on the inner side surface 2342a of the extension portion 2342. The first guide channel 238 having this structure is simple in structure and easy to mold, and does not affect the insulating performance of the extension portion 2342.

In some embodiments, referring to Fig. 6, along the thickness direction Z of the end cover 230, one end of the first guide groove extends to the end of the extension portion 2342 away from the body portion 2341.

Exemplarily, the connecting element 233 is partially accommodated in the accommodating cavity, and the connecting element 233 partially exceeds the end of the extension portion 2342 away from the body portion 2341. The first guide groove is a linear groove extending along the thickness direction Z of the end cover 230.

During molding, the first guide groove may be molded from the end of the extension portion 2342 away from the body portion 2341 to a direction close to the body portion 2341, so that the molding difficulty of the first guide groove is reduced. In addition, the length of the first guide groove is increased, and the first guide groove forms an outlet at the end of the extension portion 2342 away from the body portion 2341, so that even if the connecting element 233 partially exceeds the end of the extension portion 2342 away from the body portion 2341, the smoothness of the first guide groove can be ensured.

In other embodiments, the first guide groove may also not extend to the end of the extension portion 2342 away from the body portion 2341. In this case, the connecting element 233 may be completely accommodated in the accommodating cavity, so that the connecting element 233 does not completely cover the first guide groove.

In some embodiments, referring to Fig. 7, Fig. 7 is a schematic view of connection between a connecting element 233 and a first insulating member 234 provided in some other embodiments of the present application. The first guide channel 238 is a first guide groove arranged on the outer side surface 2331 of the connecting element 233.

The outer side surface 2331 is a surface of the connecting element 233 opposite to the extension portion 2342 and distributed along a circumferential direction. In this embodiment, the first guide groove may be a straight groove or a bent groove. If the first guide groove is a linear groove, the first guide groove may extend along the thickness direction Z of the end cover 230, or may be arranged at a non-zero angle with the thickness direction Z of the end cover 230. The cross section of the first guide groove may be rectangular, arc-shaped, V-shaped, or the like.

In a case that there are two electrode terminals 231 in the end cover assembly 23 and the body portion 2341 is provided with two second mounting holes 2341a correspondingly, the two second mounting holes 2341a may be provided with two first guide grooves correspondingly, and in the arrangement direction of the two second mounting holes 2341a, the two first guide grooves are located on both sides of the connecting element 233.

In this embodiment, the first guide channel 238 is a first guide groove arranged on the outer side surface 2331 of the connecting element 233. The first guide channel 238 having this structure is simple in structure and easy to mold. Since the first guide channel 238 is arranged on the outer side surface 2331 of the connecting element 233, the strength of the extension portion 2342 cannot be reduced due to the arrangement of the first guide channel 238, and the service life of the first insulating member 234 is prolonged.

In some embodiments, referring to Fig. 7, along the thickness direction Z of the end cover 230, one end of the first guide groove extends to the end of the connecting element 233 away from the body portion 2341.

Exemplarily, the connecting element 233 is partially accommodated in the accommodating cavity, and the connecting element 233 partially exceeds the end of the extension portion 2342 away from the body portion 2341. The first guide groove is a linear groove extending along the thickness direction Z of the end cover 230.

In this embodiment, one end of the first guide groove extends to the end of the connecting element 233 away from the body portion 2341, so that the molding difficulty of the first guide groove is reduced, the length of the first guide groove is increased, and the smoothness of the first guide groove is ensured. In addition, in a case that the connecting element 233 exceeds the end of the extension portion 2342 away from the body portion 2341, the first guide groove has a portion that exceeds the extension portion 2342, thereby further ensuring the smoothness of the first guide groove.

In some embodiments, referring to Fig. 6 and Fig. 7, the end cover assembly 23 further includes a second guide channel 239, the second guide channel 239 is formed between the body portion 2341 and the connecting element 233, and the second guide channel 239 is configured to communicate the first guide channel 238 with the second mounting hole 2341a.

It can be understood that the first guide channel 238 is in indirect communication with the second mounting hole 2341a through the second guide channel 239. Along the thickness direction Z of the end cover 230, the connecting element 233 has a first surface 2333 facing the body portion 2341, the first surface 2333 is a bottom surface of the accommodating cavity, and the body portion 2341 has a second surface 2341b facing the connecting element 233. The second guide channel 239 may be a guide groove arranged on the first surface 2333, a guide groove arranged on the second surface 2341b, a channel formed by the guide groove on the first surface 2333 and the guide groove on the second surface 2341b, a channel formed by a gap between the first surface 2333 and the second surface 2341b, or an irregular channel formed by the first surface 2333 being a rough surface and/or the second surface 2341b being a rough surface.

In this embodiment, the second guide channel 239 plays a role in communicating the first guide channel 238 with the second mounting hole 2341a, the second guide channel 239 is formed between the body portion 2341 and the connecting element 233, and thus, a communication path communicating the first guide channel 238 with the second mounting hole 2341a can be effectively shortened.

In some embodiments, referring to Fig. 6, along the thickness direction Z of the end cover 230, the connecting element 233 has a first surface 2333 facing the body portion 2341, and the second guide channel 239 is a second guide groove arranged on the first surface 2333.

It should be noted that in a case that the first guide channel 238 is a first guide groove, whether the first guide groove is arranged on the inner side surface 2342a of the extension portion 2342, or the first guide groove is arranged on the outer side surface 2331 of the connecting element 233, the second guide channel 239 may be a second guide groove arranged on the first surface 2333. Exemplarily, in Fig. 6, the first guide channel 238 is a first guide groove arranged on the inner side surface 2342a of the extension portion 2342.

Exemplarily, the first surface 2333 of the connecting element 233 may be a plane perpendicular to the thickness direction Z of the end cover 230.

In this embodiment, the second guide groove arranged on the first surface 2333 may be a straight groove or a bent groove. If the second guide groove is a linear groove, the second guide groove may extend along the thickness direction Z perpendicular to the end cover 230. The cross section of the second guide groove may be rectangular, arc-shaped, V-shaped, or the like.

In a case that there are two electrode terminals 231 in the end cover assembly 23 and the body portion 2341 is provided with two second mounting holes 2341a correspondingly, the second guide groove on the first surface 2333 can extend along the arrangement direction of the two second mounting holes 2341a so as to be in communication with the first guide groove.

In this embodiment, the second guide groove is arranged on the first surface 2333 of the connecting element 233 facing the body portion 2341, so that the molding difficulty of the second guide groove can be effectively reduced. In addition, since the second guide groove is arranged on the connecting element 233, the insulating performance of the body portion 2341 of the first insulating member 234 cannot be affected.

In some embodiments, referring to Fig. 8, Fig. 8 is a schematic structural view of the connecting element 233 shown in Fig. 6. The connecting element 233 is provided with a third mounting hole 2332 for the electrode terminal 231 to pass through, and the second guide groove extends to the hole wall of the third mounting hole 2332.

The second guide groove extends to the hole wall of the third mounting hole 2332, so that the second guide groove is in communication with the third mounting hole 2332. Exemplarily, the second guide groove is a linear groove, one end of the second guide groove extends to the hole wall of the third mounting hole 2332, and the other end of the second guide groove extends to the outer side surface 2331 of the connecting element 233, so as to be in communication with the first guide groove.

Since the electrode terminal 231 passes through the second mounting hole 2341a and the third mounting hole 2332, the second guide groove is in communication with the second mounting hole 2341a, and thus, the communication effect between the second guide groove and the second mounting hole 2341a can be improved.

In some embodiments, referring to Fig. 7, along the thickness direction Z of the end cover 230, the body portion 2341 has a second surface 2341b facing the connecting element 233, and the second guide channel 239 is a second guide groove arranged on the second surface 2341b.

It should be noted that in a case that the first guide channel 238 is a first guide groove, whether the first guide groove is arranged on the inner side surface 2342a of the extension portion 2342, or the first guide groove is arranged on the outer side surface 2331 of the connecting element 233, the second guide channel 239 may be a second guide groove arranged on the second surface 2341b. Exemplarily, in Fig. 7, the first guide channel 238 is a first guide groove arranged on the outer side surface 2331 of the connecting element 233.

Exemplarily, the second surface 2341b of the body portion 2341 may be a plane perpendicular to the thickness direction Z of the end cover 230.

In this embodiment, the second guide groove arranged on the second surface 2341b may be a straight groove or a bent groove. If the second guide groove is a linear groove, the second guide groove may extend along the thickness direction Z perpendicular to the end cover 230. The cross section of the second guide groove may be rectangular, arc-shaped, V-shaped, or the like.

In a case that there are two electrode terminals 231 in the end cover assembly 23 and the body portion 2341 is provided with two second mounting holes 2341a correspondingly, the second guide groove on the second surface 2341b can extend along the arrangement direction of the two second mounting holes 2341a so as to be in communication with the first guide groove.

In this embodiment, since the second mounting hole 2341a is arranged on the body portion 2341 and the second guide groove is arranged on the second surface 2341b of the body portion 2341 facing the connecting element 233, it is easier to achieve the communication between the second guide groove and the second mounting hole 2341a, and the communication effect between the second guide groove and the second mounting hole 2341a is improved.

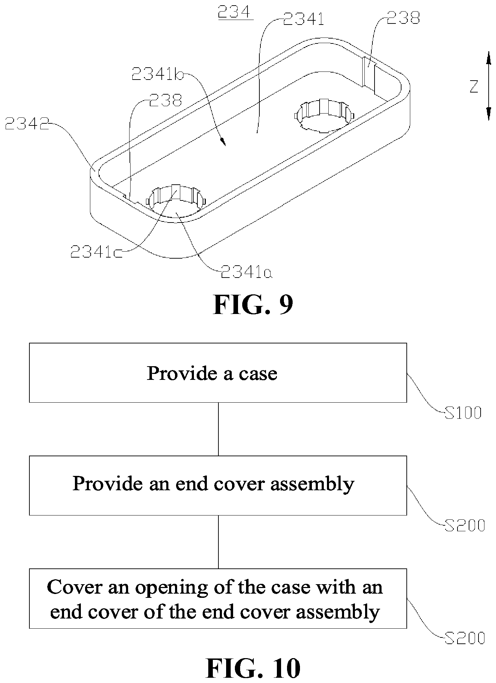

In some embodiments, referring to Fig. 9, Fig. 9 is a schematic structural view of the first insulating member 234 shown in Fig. 6. the hole wall of the second mounting hole 2341a is provided with a third guide groove 2341c, along the thickness direction Z of the end cover 230, the third guide groove 2341c penetrates through the body portion 2341, and the third guide groove 2341c is in communication with the second guide groove.

It should be noted that whether the second guide groove is arranged on the first surface 2333 of the connecting element 233, or arranged on the second surface 2341b of the body portion 2341, the hole wall of the second mounting hole 2341a may be provided with a third guide groove 2341c so as to communicate the second guide groove with the second mounting hole 2341a through the third guide groove 2341c.

Exemplarily, the hole wall of the second mounting hole 2341a is provided with a plurality of third guide grooves 2341c, the plurality of third guide grooves 2341c are distributed at intervals along a circumferential direction of the second mounting hole 2341a, and the second guide groove is in communication with one of the third guide grooves 2341c.

The third guide groove 2341c plays a role in communicating the second guide groove with the second mounting hole 2341a, and the third guide groove 2341c can increase a gap between the body portion 2341 and the electrode terminal 231, thereby ensuring good communication between the inside of the case 21 and the outside of the case 21 when the sealing member 232 fails.

In some embodiments, referring to Fig. 6 and Fig. 7, the second guide groove extends to the first guide groove to achieve communication between the second guide groove and the first guide groove.

Referring to Fig. 6, in the embodiment where the second guide groove is arranged on the first surface 2333 of the connecting element 233, one end of the second guide groove extends to the first guide groove, and the other end of the second guide groove extends to the hole wall of the third mounting hole 2332. Referring to Fig. 7, in the embodiment where the second guide groove is arranged on the second surface 2341b of the body portion 2341, one end of the second guide groove extends to the first guide groove, and the other end of the second guide groove extends to the hole wall of the second mounting hole 2341a.

In this embodiment, since the second guide groove extends to the first guide groove, direct communication between the second guide groove and the first guide groove is achieved, and the communication path communicating the inside of the case 21 with the outside of the case 21 is shortened.

In other embodiments, the second guide groove may also be in indirect communication with the first guide groove. For example, the connecting element 233 is a rectangular block, the second guide groove extends along a length direction of the connecting element 233, and the first guide groove is located on the side of the extension portion 2342 in a width direction of the connecting element 233. In this case, there is a certain distance between the first guide groove and the second guide groove, so that other channels may be arranged between the first guide groove and the second guide groove to communicate the first guide groove with the second guide groove.

In some embodiments, referring to Fig. 6 and Fig. 7, the width of the first guide groove is greater than the width of the second guide groove. This structure can ensure that the first guide groove and the second guide groove have a sufficiently large overlapping region, ensure the width of a communication position between the first guide groove and the second guide groove, and reduce the risk of a narrower communication position between the first guide groove and the second guide groove caused by significant misalignment between the first guide groove and the second guide groove due to manufacturing errors.

An embodiment of the present application provides a battery cell 20, including a case 21 and the end cover assembly 23 provided in any one of the above embodiments. The case 21 has an opening, and the end cover 230 is configured to cover the opening to seal the case 21.

An embodiment of the present application provides a battery 100, including a box body 10 and the battery cell 20 provided in any one of the above embodiments. The box body 10 is configured to accommodate the battery cell 20.

An embodiment of the present application provides an electrical device, including the battery 100 provided in any one of the above embodiments.

The electrical device may be any one of the above devices using the battery 100.

In addition, referring to Fig. 5, an embodiment of the present application provides an end cover assembly 23, including an end cover 230, an electrode terminal 231, a sealing member 232, a connecting element 233 and a first sealing member 232. The first sealing member 232 includes a body portion 2341 and an extension portion 2342, the body portion 2341 is located between the connecting element 233 and the end cover 230 along the thickness direction Z of the end cover 230, the body portion 2341 is provided with a second mounting hole 2341a for the electrode terminal 231 to pass through, and the extension portion 2342 is located on the outer periphery of the connecting element 233 and encloses the edge of the body portion 2341. The extension portion 2342 is provided with a first guide channel 238, the connecting element 233 is provided with a second guide channel 239, and the first guide channel 238 is in communication with the second mounting hole 2341a through the second guide channel 239. The first guide channel 238 is a first guide groove arranged on the inner side surface 2342a of the extension portion 2342, and the second guide groove is a second guide groove arranged on the surface of the connecting element 233 facing the body portion 2341.

In this end cover assembly 23, the first guide channel 238 on the extension portion 2342 is in communication with the second mounting hole 2341a on the body portion 2341 through the second guide channel 239 on the body portion 2341. When the sealing member 232 fails, the inside of the case 21 is in communication with the outside of the case 21 so as to eliminate the phenomenon of false sealing of the battery cell 20 and improve the safety of the battery cell 20.

Referring to Fig. 10, Fig. 10 is a flowchart of a manufacturing method for a battery cell 20 provided in some embodiments of the present application. An embodiment of the present application provides a manufacturing method for a battery cell 20. The manufacturing method includes:

S100: A case 21 is provided, and the case 21 has an opening.

S200: An end cover assembly 23 is provided, and the end cover assembly 23 includes an end cover 230, an electrode terminal 231, a sealing member 232, a connecting element 233, a first insulating member 234 and a first guide channel 238. The end cover 230 is provided with a first mounting hole 2301 penetrating through the end cover 230 along a thickness direction Z of the end cover 230, and the end cover 230 is configured to seal a case 21 of a battery cell 20. The electrode terminal 231 partially penetrates into the first mounting hole 2301. The sealing member 232 is at least partially located in the first mounting hole 2301 to seal the electrode terminal 231 and the end cover 230. The connecting element 233 is connected to the electrode terminal 231. The first insulating member 234 includes a body portion 2341 and an extension portion 2342, the body portion 2341 is located between the connecting element 233 and the end cover 230 along the thickness direction Z of the end cover 230, the body portion 2341 is provided with a second mounting hole 2341a for the electrode terminal 231 to pass through, and the extension portion 2342 is located on the outer periphery of the connecting element 233 and encloses the edge of the body portion 2341. The first guide channel 238 is formed between the extension portion 2342 and the connecting element 233, and the first guide channel 238 is in communication with the second mounting hole 2341a so that the outside of the case 21 is in communication with the inside of the case 21 when the sealing member 232 fails.

S300: The opening of the case 21 is covered with the end cover 230 of the end cover assembly 23.

In the above method, the sequence of step S 100 and step S200 is not limited. Step S 100 may be performed first, and then step S200 is performed; or, step S200 may be performed first, and then step S100 is performed.

It should be noted that, for the related structures of the battery cell 20 manufactured by the manufacturing method provided in each of the above embodiments, reference may be made to the battery cell 20 provided in each of the above embodiments, and details will not be described herein again.

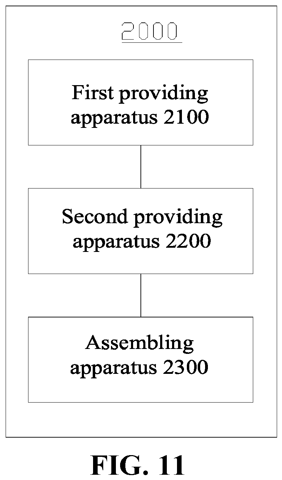

Referring to Fig. 11, Fig. 11 is a schematic block diagram of a manufacturing device 2000 for a battery cell 20 provided in some embodiments of the present application. An embodiment of the present application provides a manufacturing device 2000 for a battery cell 20. The manufacturing device 2000 includes a first providing apparatus 2100, a second providing apparatus 2200 and an assembling apparatus 2300.

The first providing apparatus 2100 is configured to provide a case 21, and the case 21 has an opening. The second providing apparatus 2200 is configured to provide an end cover assembly 23, and the end cover assembly 23 includes an end cover 230, an electrode terminal 231, a sealing member 232, a connecting element 233, a first insulating member 234 and a first guide channel 238. The end cover 230 is provided with a first mounting hole 2301 penetrating through the end cover 230 along a thickness direction Z of the end cover 230, and the end cover 230 is configured to seal a case 21 of a battery cell 20. The electrode terminal 231 partially penetrates into the first mounting hole 2301. The sealing member 232 is at least partially located in the first mounting hole 2301 to seal the electrode terminal 231 and the end cover 230. The connecting element 233 is connected to the electrode terminal 231. The first insulating member 234 includes a body portion 2341 and an extension portion 2342, the body portion 2341 is located between the connecting element 233 and the end cover 230 along the thickness direction Z of the end cover 230, the body portion 2341 is provided with a second mounting hole 2341a for the electrode terminal 231 to pass through, and the extension portion 2342 is located on the outer periphery of the connecting element 233 and encloses the edge of the body portion 2341. The first guide channel 238 is formed between the extension portion 2342 and the connecting element 233, and the first guide channel 238 is in communication with the second mounting hole 2341a so that the outside of the case 21 is in communication with the inside of the case 21 when the sealing member 232 fails. The assembling apparatus 2300 is configured to cover the opening with the end cover 230.

It should be noted that, for the related structures of the battery cell 20 manufactured by the manufacturing device 2000 provided in the above embodiment, reference may be made to the battery cell 20 provided in each of the above embodiments, and details will not be described herein again.

It should be noted that, in the case of no conflict, the embodiments in the present application and the features in the embodiments may be combined with each other.

The above embodiments are merely used for describing the technical solutions of the present application, but are not intended to limit the present application. It will be apparent to those skilled in the art that various modifications and changes may be made in the present application. Any modification, equivalent replacement and improvement made within the spirit and principle of the present application shall be included in the protection scope of the present application.

## Claims

1. An end cover assembly, comprising:
an end cover, provided with a first mounting hole penetrating through the end cover along a thickness direction of the end cover, the end cover being configured to seal a case of a battery cell;
an electrode terminal, partially penetrating into the first mounting hole;
a sealing member, at least partially located in the first mounting hole to seal the electrode terminal and the end cover;
a connecting element, connected to the electrode terminal;
a first insulating member, comprising a body portion and an extension portion, the body portion being located between the connecting element and the end cover along the thickness direction, the body portion being provided with a second mounting hole for the electrode terminal to pass through, and the extension portion being located on the outer periphery of the connecting element and enclosing the edge of the body portion; and
a first guide channel, formed between the extension portion and the connecting element, the first guide channel being in communication with the second mounting hole so that the inside of the case is in communication with the outside of the case when the sealing member fails.

2. The end cover assembly according to claim 1, wherein the first guide channel is a first guide groove arranged on the inner side surface of the extension portion.

3. The end cover assembly according to claim 2, wherein along the thickness direction, one end of the first guide groove extends to the end of the extension portion away from the body portion.

4. The end cover assembly according to claim 1, wherein the first guide channel is a first guide groove arranged on the outer side surface of the connecting element.

5. The end cover assembly according to claim 4, wherein along the thickness direction, one end of the first guide groove extends to the end of the connecting element away from the body portion.

6. The end cover assembly according to any one of claims 2 to 5, wherein the end cover assembly further comprises:
a second guide channel, formed between the body portion and the connecting element, the second guide channel being configured to communicate the first guide channel with the second mounting hole.

7. The end cover assembly according to claim 6, wherein along the thickness direction, the connecting element has a first surface facing the body portion; and
the second guide channel is a second guide groove arranged on the first surface.

8. The end cover assembly according to claim 7, wherein the connecting element is provided with a third mounting hole for the electrode terminal to pass through; and
the second guide groove extends to the hole wall of the third mounting hole.

9. The end cover assembly according to claim 6, wherein along the thickness direction, the body portion has a second surface facing the connecting element; and
the second guide channel is a second guide groove arranged on the second surface.

10. The end cover assembly according to any one of claims 7 to 9, wherein the hole wall of the second mounting hole is provided with a third guide groove, along the thickness direction, the third guide groove penetrates through the body portion, and the third guide groove is in communication with the second guide groove.

11. The end cover assembly according to any one of claims 7 to 9, wherein the second guide groove extends to the first guide groove to achieve communication between the second guide groove and the first guide groove.

12. The end cover assembly according to claim 11, wherein the width of the first guide groove is greater than the width of the second guide groove.

13. A battery cell, comprising:
a case having an opening; and
the end cover assembly according to any one of claims 1 to 12, the end cover being configured to cover the opening to seal the case.

14. A battery, comprising:
the battery cell according to claim 13; and
a box body, configured to accommodate the battery cell.

15. An electrical device, comprising the battery according to claim 14.

16. A manufacturing method for a battery cell, comprising:
providing a case having an opening;
providing an end cover assembly comprising:
an end cover, provided with a first mounting hole penetrating through the end cover along a thickness direction of the end cover, the end cover being configured to seal a case of a battery cell;
an electrode terminal, partially penetrating into the first mounting hole;
a sealing member, at least partially located in the first mounting hole to seal the electrode terminal and the end cover;
a connecting element, connected to the electrode terminal;
a first insulating member, comprising a body portion and an extension portion, the body portion being located between the connecting element and the end cover along the thickness direction, the body portion being provided with a second mounting hole for the electrode terminal to pass through, and the extension portion being located on the outer periphery of the connecting element and enclosing the edge of the body portion; and
a first guide channel, formed between the extension portion and the connecting element, the first guide channel being in communication with the second mounting hole so that the outside of the case is in communication with the inside of the case when the sealing member fails; and
covering the opening with the end cover.

17. A manufacturing device for a battery cell, comprising:
a first providing apparatus, configured to provide a case having an opening;
a second providing apparatus, configured to provide an end cover assembly comprising:
an end cover, provided with a first mounting hole penetrating through the end cover along a thickness direction of the end cover, the end cover being configured to seal a case of a battery cell;
an electrode terminal, partially penetrating into the first mounting hole;
a sealing member, at least partially located in the first mounting hole to seal the electrode terminal and the end cover;
a connecting element, connected to the electrode terminal;
a first insulating member, comprising a body portion and an extension portion, the body portion being located between the connecting element and the end cover along the thickness direction, the body portion being provided with a second mounting hole for the electrode terminal to pass through, and the extension portion being located on the outer periphery of the connecting element and enclosing the edge of the body portion; and
a first guide channel, formed between the extension portion and the connecting element, the first guide channel being in communication with the second mounting hole so that the outside of the case is in communication with the inside of the case when the sealing member fails; and
an assembling apparatus, configured to cover the opening with the end cover.
